# EUROPEAN PATENT SPECIFICATION

(11) **EP 1 396 154 B1**
(45) Date of publication and mention of the grant of the patent: **09.05.2007**
(21) Application number: 02733047.1
(22) Date of filing: 28.05.2002
(51) Int. Cl.: H04N 7/68

(54) **ERROR CONCEALMENT METHOD AND DEVICE**
VERFAHREN UND EINRICHTUNG ZUM VERBERGEN VON FEHLERN
PROCEDE ET DISPOSITIF DE MASQUAGE D'ERREURS

(30) Priority: 29.05.2001 EP 01401406
(43) Date of publication of application: 10.03.2004
(73) Proprietor: Koninklijke Philips Electronics N.V., 5621 BA Eindhoven (NL)
(72) Inventor: VALENTE, Stephane, E., NL-5656 AA Eindhoven (NL)
(74) Representative: van Oudheusden-Perset, Laure E.
(86) International application number: PCT/IB2002/001887
(87) International publication number: WO 2002/098139

(56) References cited:
- EP-A- 0 782 347
- EP-A- 0 999 709
- US-A- 5 936 674
- WILSON KWOK ET AL: "MULTI-DIRECTIONAL INTERPOLATION FOR SPATIAL ERROR CONCEALMENT" IEEE TRANSACTIONS ON CONSUMER ELECTRONICS, IEEE INC. NEW YORK, US, vol. 39, no. 3, 1 August 1993 (1993-08-01), pages 455-460, XP000396318 ISSN: 0098-3063
- AIGN S ET AL: "TEMPORAL & SPATIAL ERROR CONCEALMENT TECHNIQUES FOR HIERARCHICAL MPEG-2 VIDEO CODEC" COMMUNICATIONS - GATEWAY TO GLOBALIZATION. PROCEEDINGS OF THE CONFERENCE ON COMMUNICATIONS. SEATTLE, JUNE 18 - 22, 1995, PROCEEDINGS OF THE CONFERENCE ON COMMUNICATIONS (ICC), NEW YORK, IEEE, US, vol. 3, 18 June 1995 (1995-06-18), pages 1778-1783, XP000535053 ISBN: 0-7803-2487-0 cited in the application
- YAO WANG ET AL: "MAXIMALLY SMOOTH IMAGE RECOVERY IN TRANSFORM CODING" IEEE TRANSACTIONS ON COMMUNICATIONS, IEEE INC. NEW YORK, US, vol. 41, no. 10, 1 October 1993 (1993-10-01), pages 1544-1551, XP000398028 ISSN: 0090-6778 cited in the application

## Description

The present invention relates to a method of concealing errors in an image signal transmitted in a macroblock-compressed form, each macroblock comprising lines and columns of pixels, the method comprising at least the steps of:
a) decoding the transmitted image signal;
b) detecting an erroneous macroblock;
c) classifying the erroneous macroblock for obtaining a class to which the erroneous macroblock belongs;
d) correcting the erroneous macroblock in accordance with its class.
   The present invention also relates to a corresponding device for carrying out such a concealment method.
   The present invention is particularly relevant for correction of MPEG compressed video signals.

### BACKGROUND OF THE INVENTION

One of the goals of a video signal compression is a transmission through networks, like radio channels or the Internet Transmission errors can damage the visual quality of a decoded stream, and some efficient error concealment techniques are therefore needed. An error concealment may consist of interpolating missing data from a spatial redundancy found in the decoded stream, that is, interpolating a macroblock from some pixels around it. Several spatial concealment algorithms can be found, which have different properties. When different concealment algorithms are available in a decoder, it seems to be a good idea to have an algorithm which is capable of preserving edge information and another one which is specialized in a reconstruction of smooth variations. European Patent EP 0782347 describes a method of classifying an erroneous macroblock in a monotonous, an edge or a texture class and rectifying the erroneous macroblock in accordance with such a classification. The classification takes into account a predefined number of valid surrounding macroblocks, that is without containing an error therein. It consists of:
- classifying each of the valid surrounding macroblocks in a monotonous, an edge or a texture class, the monotonous class representing a macroblock without containing an edge therein, the edge class representing a macroblock containing one edge therein and the texture class representing a macroblock containing more than one edge therein;
- classifying the erroneous macroblock as the edge class if only one pair of the valid surrounding macroblocks positioned opposite each other with respect to the erroneous macroblock is of the edge class and has an identical edge direction; and, otherwise, as either the monotonous class or the texture class depending on the number of the surrounding macroblocks having either the monotonous or the texture class.
The proposed method of classifying each of the surrounding macroblocks comprises many steps, including a variance calculation and a relatively large number of directional projections. Therefore, this method is expensive and may not be implemented for real time applications on processors with small resources like, for example, in a mobile phone. Furthermore, the method of classifying the erroneous macroblock in accordance with the classes of the valid surrounding macroblocks supposes that an erroneous macroblock has a predefined number of surrounding macroblocks, which may not be the case because, on the one hand, burst errors can span several rows of macroblocks and, on the other hand, an erroneous macroblock may be at a border of an image.

It is an object of the invention to provide a cost-effective method of concealing errors and a corresponding device.

To this end, a method of concealing errors according to the invention, as described in the opening paragraph, is characterized in that:
i) said erroneous macroblock has at least one valid surrounding macroblock without containing an error therein ;
ii) said classifying step comprises at least the following sub-steps:
   - computing a gradient, for each valid surrounding macroblock, for each pixel of a line or a column adjacent to the erroneous macroblock, by subtracting values of two consecutive pixels of said line or column;
   - evaluating a number C_{dir} of direction changes of the gradient;
iii) the erroneous macroblock is classified as an edge class if the absolute value of at least one gradient is above a first predefined threshold, as a texture class if C_{dir} is strictly positive and the number of absolute values of gradients above a second predefined threshold is larger than α multiplied by C_{dir}, α being a programmable amount, and, otherwise, as a noise or a monotonous class.

According to the invention, a class of an erroneous macroblock is determined in a very cost-effective way. Actually, only the pixels directly adjacent to the erroneous macroblock are taken into account for such a determination. That is, if we consider the MPEG-4 standard using macroblocks of 16 by 16 pixels, only 60 gradients have to be computed and compared with two thresholds to determine the class of the erroneous macroblock, in a case where the four macroblocks surrounding the erroneous macroblocks are valid, that is, without containing an error therein. Furthermore, the classifying step can be applied to any erroneous macroblock, regardless of the number of valid surrounding macroblocks, as soon as this erroneous macroblock has at least one valid surrounding macroblock. Therefore, as soon as there is one valid macroblock in an image, the other macroblocks can be concealed, using this concealment method recursively.

In a preferred embodiment, the correcting step uses an algorithm selected from a set of algorithms with a predetermined selection order, said set and/or selection order varying in accordance with the class of the erroneous macroblock. According to this preferred embodiment, a best available algorithm is selected to correct a macroblock of a given class. If, for any reason, this algorithm does not manage to conceal the erroneous macroblock, another algorithm is tried, and so on.

In another preferred embodiment, the first algorithm in the selection order is an algorithm Medge which is capable of preserving edge information if the erroneous macroblock belongs to the edge class or to the texture class, and an algorithm Msmooth which is specialized in the reconstruction of smooth variations if the erroneous macroblock belongs to the noise class or to the monotonous class.

In one embodiment, Medge is a quadrilinear interpolation.

In another embodiment, Msmooth is a maximally smooth interpolation.

The present invention also relates to a computer program comprising a set of instructions which, when loaded into a processor or a computer, causes the processor or the computer to carry out the previously described concealment method.

These and other aspects of the invention are apparent from and will be elucidated with reference to the embodiments described hereinafter.

The invention will now be described in more detail, by way of example, with reference to the accompanying drawings, in which:
- Figure 1 shows a block diagram of a method according to the invention;
- Figure 2a illustrates a computation of gradients;
- Figure 2b illustrates a classification based on computed gradients;
- Figure 3a illustrates a method according to the invention, applied on a macroblock of the edge class;
- Figure 3b illustrates a method according to the invention, applied on a macroblock of the texture class;
- Figure 4a illustrates a method according to the invention, applied on a macroblock of the noise class;
- Figure 4b illustrates a method according to the invention, applied on a macroblock of the monotonous class;
- Figure 5 is a table indicating a set of algorithms and a selection order for each class.

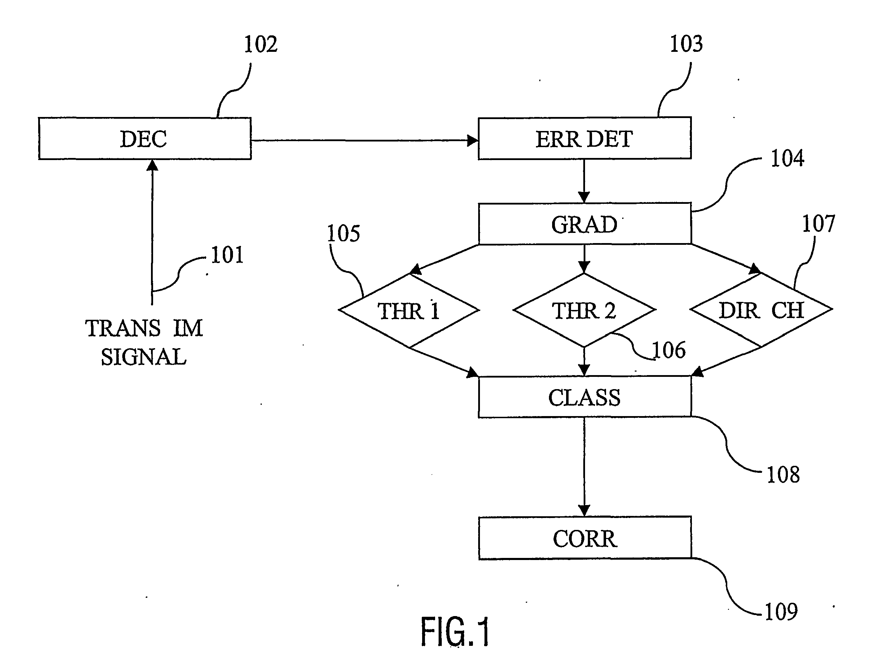

A concealment method according to the invention is depicted in Figure 1. Such a method comprises at least a decoding step 102 applied on a transmitted image signal 101, a detecting step 103, a gradient computing step 104, a first comparing step 105, a second comparing step 106, an evaluating step 107, a classifying step 108 and a correcting step 109.

In the following, the transmitted image signal 101 is an MPEG-4 video signal, which has been encoded using 16*16 macroblocks, each containing pixels having a chrominance or a luminance value or both of them (in the following, the term "value" designates either the chrominance or the luminance). It will be apparent to a person skilled in the art that the concealment method according to the invention is intended to be used with any signal that has been encoded using a block-based processing.

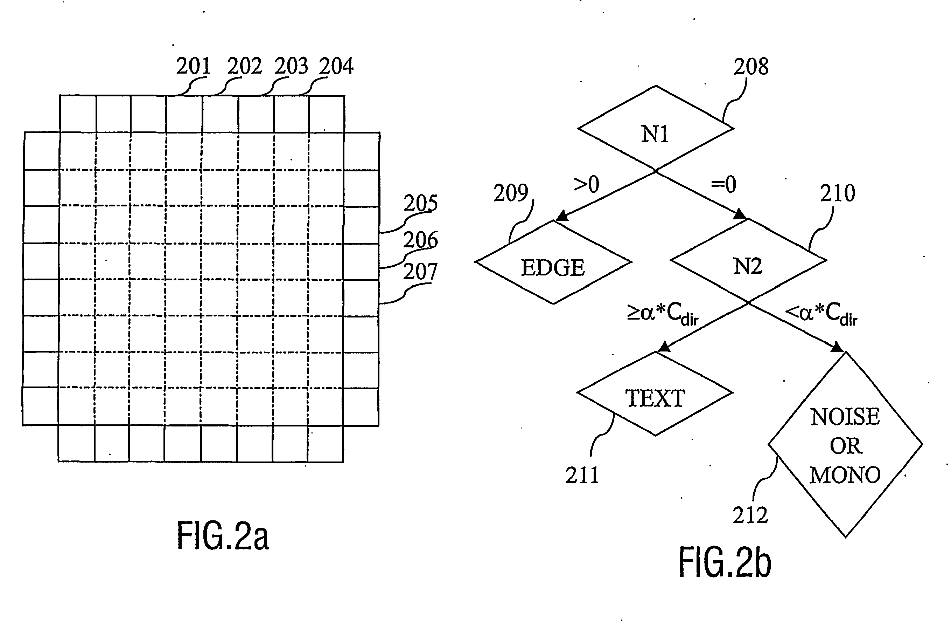

In detecting step 103, a macroblock is analyzed to determine if it is erroneous or not Such a determination is well known to a person skilled in the art, and can be found, for example, in U.S. Patent 5,455,629 filed February 12, 1993, and entitled "Apparatus for concealing errors in a digital video processing system". If this macroblock is erroneous, gradients between two consecutive pixels of the adjacent lines and columns of all the valid surrounding macroblocks are computed in gradient computing step 104. Such a computation will be described in detail in Figure 2. In the first comparing step 105, absolute values of the computed gradients are compared with a first threshold, and the number N1 of gradients in absolute value above the first threshold is determined. In the second comparing step 106, absolute values of the computed gradients are compared with a second threshold, and the number N2 of gradients in absolute value above the second threshold is determined. In evaluating step 107, a number C_{dir} of direction changes of the gradient is determined. In classifying step 108, a class of the erroneous macroblock is determined, in accordance with the values ofNl, N2 and C_{dir}. In correcting step 109, the erroneous macroblock is corrected in accordance with its class.

Figure 2a illustrates a computation of gradients. This Figure shows an 8*8 erroneous macroblock having four valid surrounding macroblocks. The pixels of the erroneous macroblock are represented by broken lines. Only the two adjacent lines of the top and bottom surrounding macroblocks and the two columns of the left and right surrounding macroblocks are considered for the computation of gradients. The following table indicates how a gradient is computed, and how a direction change of the gradient is determined. In this example, four pixels 201 to 204 are considered ; the computation is the same for all the pixels of the two adjacent lines and columns, especially for pixels 205 to 207.
- Grad xxx indicates the gradient for a pixel xxx
- Val xxx indicates the value of a pixel xxx
If a pixel position is represented by a line number i and a column number j:
- For a pixel of an adjacent line at position (i, j), Grad (i, j) = Val (i, j+1)- Val (i,j)
- For a pixel of an adjacent column at position (i, j), Grad (i, j) = Val (i+1, j) - Val (i,j)

| | Grad 201 | Grad 202 | Grad 203 | C_{dir} |
|---|---|---|---|---|
| Value | Val 202 - Val 201 | Val 203 - Val 202 | Val 204 - Val 203 | |
| Sign | >0 | >0 | >0 | 0 |
| Sign | >0 | >0 | <0 | 1 |
| Sign | >0 | 0 | <0 | 1 |
| Sign | >0 | <0 | >0 | 2 |

Figure 2b illustrates a classification based on computed gradients. In step 208, the classifying step 108 determines if N1 is strictly positive or not As the first threshold is relatively high, the fact that N1 is strictly positive indicates that there is at least a strong edge in the valid surrounding macroblocks. Therefore, if N1 is strictly positive, the erroneous macroblock is classified as the edge class in step 209. If N1 is equal to zero, the classifying step 108 determines if N2 is above or equal to a quantity α* C_{dir}, α being a programmable amount. As the second threshold is relatively high but smaller than the first threshold, a gradient above the second threshold indicates a significant edge. When, for a given pixel, a direction change of a gradient occurs without any strong or significant edge, it generally indicates noise. Therefore, if C_{dir} is strictly positive and N2 is above or equal to the quantity α* C_{dir}, the erroneous macroblock is classified as the texture class in step 211, which means that this macroblock is a structured texture, with significant edges that might be visually detectable. If C_{dir} is equal to zero or N2 is smaller than the quantity α* C_{dir}, it means that the gradients around the erroneous macroblock are monotonous or that there is much more noise than significant edges in the erroneous macroblock, and the erroneous macroblock is classified as the monotonous or noise class in step 212.

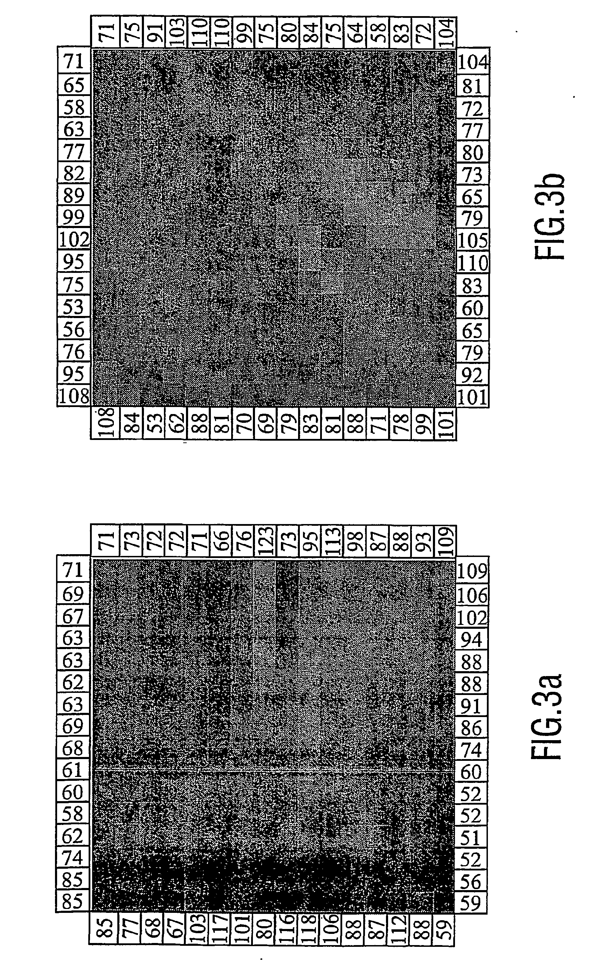

In Figures 3a to 4b, erroneous macroblocks are depicted, with their two adjacent lines and columns of valid surrounding macroblocks. Luminance values of the surrounding pixels are indicated, between 0 and 255. In these examples, the first threshold is equal to 40, the second threshold is equal to 10 and the programmable amount α is equal to 1.2. It will be apparent to a person skilled in the art that these values can easily be modified to obtain the best possible results.

Figure 3a illustrates a method according to the invention, applied on a macroblock of the edge class. The computation of the gradients indicates that there are two gradients in absolute value above the first threshold, which corresponds to a strong edge. Therefore, this erroneous macroblock is classified as the edge class.

Figure 3b illustrates a method according to the invention, applied on a macroblock of the texture class. The computation of the gradients indicates that:
- N1 = 0 N2 = 28 C_{dir}=21
Therefore, the number N2 of significant edges is larger than the programmable amount α of the number of direction changes C_{dir}, and the erroneous macroblock is classified as the texture class.

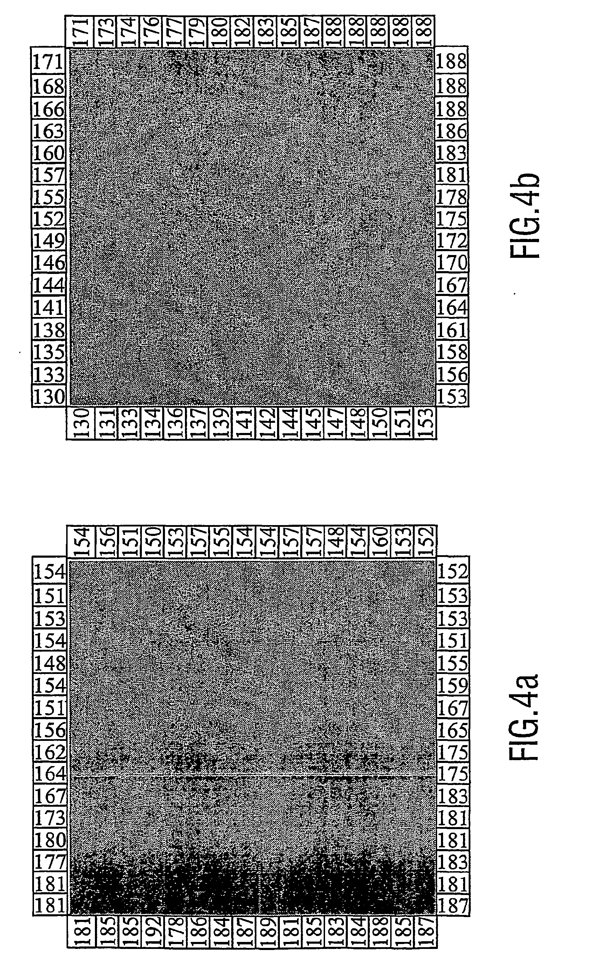

Figure 4a illustrates a method according to the invention, applied on a macroblock of the noise class. The computation of the gradients indicates that:
- N1=0 N2=1 C_{dir}=25
Therefore, the number N2 of significant edges is smaller than the programmable amount α of the number of direction changes C_{dir}, and the erroneous macroblock is classified as the noise class.

Figure 4b illustrates a method according to the invention, applied on a macroblock of the monotonous class. The computation of the gradients indicates that:
- N1=0 N2 = 0 C_{dir}=0
Therefore, the erroneous macroblock is classified as the monotonous class.

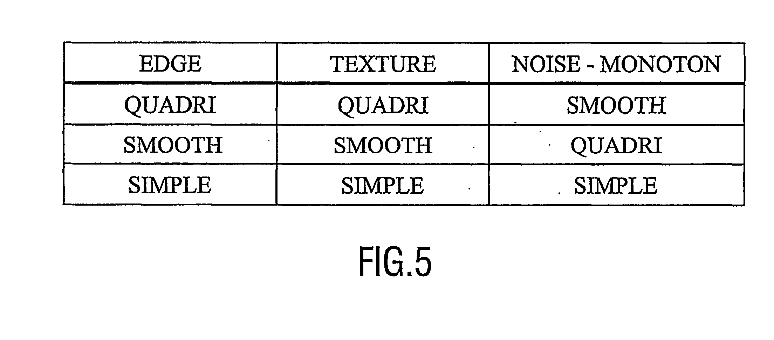

Figure 5 is a table indicating a set of algorithms and a selection order for each class. In a given system, it is possible that a given algorithm cannot be used to conceal an erroneous macroblock, for example, because:
- the erroneous macroblock does not have enough valid surrounding macroblocks;
- there are not enough memory resources in the system to use a given algorithm;
- time constraints make it impossible to use a given algorithm.

Therefore, for each class of erroneous macroblocks, a set of algorithm is available in the system, with a selection order. The system first tries to conceal a given erroneous macroblock by means of the first algorithm in the selection order. If, for this erroneous macroblock, this algorithm cannot be used, the system tries to conceal the macroblock by means of the second algorithm in the selection order, and so on. Even if a quality of concealment may be less good with the second algorithm than with the first algorithm, an advantage of using such a set of algorithms is that it almost always allows concealment of the erroneous macroblock.

For an erroneous macroblock of the edge or the texture class, the first algorithm in the selection order is a quadrilinear interpolation. This algorithm consists of interpolating the value of an erroneous pixel from closest valid top, left, bottom and right pixels surrounding it. An example of a quadrilinear interpolation is described in the document entitled "Temporal and Spatial Error Concealment Techniques for Hierarchical MPEG-2 Video Codec", by Susanna Aign and Khaled Fazel, published in Proc. Globelcom'95, pp. 1778-1783. This algorithm is known to be good at preserving edge information in an erroneous macroblock. The second algorithm in the selection order is a maximally smooth interpolation. An example of a maximally smooth interpolation is described in the document entitled "Maximally Smooth Image Recovery in Transform Coding", by Yao Wang, Quin-Fan Zhu and Leonard Shaw, published in 'IEEE Transactions on Communications, vol.41, No. 10, October 1993'. This algorithm is known to be good at reconstructing smooth variations. A third algorithm in the selection order is a simple interpolation, which consists, for example, of replacing an erroneous macroblock by a mean value of valid surrounding macroblocks. Such a simple interpolation is intended to be able to conceal most of the erroneous macroblocks, even if the quality of concealment is not the best possible.

For an erroneous macroblock of the noise or the monotonous class, the first algorithm in the selection order is a maximally smooth interpolation, the second algorithm is a quadrilinear interpolation and the third algorithm is a simple interpolation.

The drawings and their description hereinbefore illustrate rather than limit the invention. In this respect, the following closing remarks are made.

There are various manners of concealing an erroneous macroblock once it has been classified. Figure 5 provides, for each class, a set of algorithms that can be used to conceal an erroneous macroblock of this class. It will be apparent to a person skilled in the art that other algorithms can be used without departing from the scope of the invention.

The concealment method according to the invention can be implemented in an integrated circuit, which is intended to be integrated in a set top box or a television receiver. A set of instructions that is loaded into a program memory causes the integrated circuit to carry out the concealment method. The set of instructions may be stored on a data carrier such as, for example, a disk. The set of instructions can be read from the data carrier so as to load it into the program memory of the integrated circuit which will then fulfil its role.

## Claims

1. A method of concealing errors in an image signal transmitted in a macroblock-compressed form, each macroblock comprising lines and columns of pixels, the method comprising at least the steps of:
a) decoding (102) the transmitted image signal;
b) detecting (103) an erroneous macroblock;
c) classifying (108) the erroneous macroblock for obtaining a class to which the erroneous macroblock belongs;
d) correcting (109) the erroneous macroblock in accordance with its class;
said method being further **characterized in that**:
i) said erroneous macroblock has at least one valid surrounding macroblock without containing an error therein;
ii) said classifying step (108) comprises at least the following sub-steps:
- computing a gradient (104) for each valid surrounding macroblock, for each pixel of a line or a column adjacent to the erroneous macroblock, by subtracting values of two consecutive pixels of said line or column;
- evaluating (107) a number C_{dir} of direction changes of the gradient;
iii) the erroneous macroblock is classified as an edge class if the absolute value of at least one gradient is above a first predefined threshold, as a texture class if C_{dir} is strictly positive and the number of absolute values of gradients above a second predefined threshold is larger than α multiplied by C_{dir}, α being a programmable amount, and, otherwise, as a noise or a monotonous class.

2. A concealment method as claimed in claim 1, wherein said correcting step uses an algorithm selected from a set of algorithms with a predetermined selection order, said set and/or selection order varying in accordance with the class of the erroneous macroblock.

3. A concealment method as claimed in claim 2, wherein the first algorithm in the selection order is an algorithm Medge which is capable of preserving edge information if the erroneous macroblock belongs to the edge class or to the texture class, and an algorithm Msmooth which is specialized in the reconstruction of smooth variations if the erroneous macroblock belongs to the noise class or to the monotonous class.

4. A concealment method as claimed in claim 3, wherein said algorithm Medge is a quadrilinear interpolation.

5. A concealment method as claimed in claim 3, wherein said algorithm Msmooth is a maximally smooth interpolation.

6. A device for concealing errors in an image signal transmitted in a macroblock compressed form, each macroblock comprising lines and columns of pixels, said concealment device comprising at least:
a) means for decoding (102) the transmitted image signal;
b) means for detecting (103) an erroneous macroblock;
c) means for classifying (108) the erroneous macroblock and obtaining a class to which the erroneous macroblock belongs;
d) means for correcting (109) the erroneous macroblock in accordance with its class; said device being further **characterized in that**:
i) said erroneous macroblock has at least one valid surrounding macroblock without containing an error therein;
ii) said means for classifying (108) comprise at least:
- means for computing a gradient (104) for each valid surrounding macroblock, for each pixel of a line or a column adjacent to the erroneous macroblock, by subtracting values of two consecutive pixels of said line or column;
- means for evaluating (107) a number C_{dir} of direction changes of the gradient;
iii) the erroneous macroblock is classified as an edge class if the absolute value of at least one gradient is above a first predefined threshold, as a texture class if C_{dir} is strictly positive and the number of absolute values of gradients above a second predefined threshold is larger than α multiplied by C_{dir}, α being a programmable amount, and, otherwise, as a noise or a monotonous class.

7. A concealment device as claimed in claim 6, wherein said means for correcting use an algorithm selected from a set of algorithms with a predetermined selection order, said set and/or selection order varying in accordance with the class of the erroneous macroblock.

8. A concealment device as claimed in claim 7, wherein the first algorithm in the selection order is an algorithm Medge which is capable of preserving edge information if the erroneous macroblock belongs to the edge class or to the texture class, and an algorithm Msmooth which is specialized in the reconstruction of smooth variations if the erroneous macroblock belongs to the noise class or to the monotonous class.

9. A concealment device as claimed in claim 8, wherein said algorithm Medge is a quadrilinear interpolation.

10. A concealment device as claimed in claim 8, wherein said algorithm Msmooth is a maximally smooth interpolation.

11. A computer program comprising a set of instructions which, when loaded into a processor or a computer, causes the processor or the computer to carry out the concealment method as claimed in Claim 1.

## Patentansprüche

1. Verfahren zum Maskieren von Fehlern in einem Bildsignal, das in einer Makroblock-komprimierten Form übertragen wird, wobei jeder Makroblock Pixelzeilen und -spalten umfasst, das Verfahren mindestens die Schritte umfasst des:
a) Decodierens (102) des übertragenen Bildsignals;
b) Erkennens (103) eines fehlerhaften Makroblocks;
c) Klassifizierens (108) des fehlerhaften Makroblocks, um eine Klasse zu erhalten, welcher der fehlerhafte Makroblock angehört;
d) Korrigierens (109) des fehlerhaften Makroblocks seiner Klasse entsprechend; wobei dieses Verfahren außerdem **dadurch gekennzeichnet ist, dass**:
i) dieser fehlerhafte Makroblock mindestens einen gültigen umgebenden Makroblock aufweist, der keinen Fehler enthält;
ii) dieser Klassifizierungsschritt (108) mindestens die folgenden Unterschritte umfasst:
- das Berechnen eines Gradienten (104) für jeden gültigen umgebenden Makroblock, für jedes Pixel einer Zeile oder einer Spalte, das zum fehlerhaften Makroblock benachbart ist, durch Subtrahieren der Werte zweier aufeinanderfolgender Pixel dieser Zeile oder Spalte;
- das Auswerten (107) einer Zahl C_{dir} von Richtungsänderungen des Gradienten;
iii) der fehlerhafte Makroblock als eine Kantenklasse klassifiziert wird, wenn der Absolutwert mindestens eines Gradienten über einem ersten vordefinierten Schwellenwert liegt, als eine Texturklasse, wenn C_{dir} völlig positiv ist und die Zahl der Absolutwerte von Gradienten, die über einem zweiten vordefinierten Schwellenwert liegen, grösser ist als α multipliziert mit C_{dir}, wobei α eine programmierbare Menge ist, und, andernfalls, als ein Rauschen oder eine monotone Klasse.

2. Maskierungsverfahren nach Anspruch 1, wobei dieser Korrekturschritt einen Algorithmus verwendet, der aus einem Satz Algorithmen mit einer vorgegebenen Wahlfolge gewählt wird, wobei dieser Satz und/oder diese Wahlfolge je nach Klasse des fehlerhaften Makroblocks unterschiedlich ist.

3. Maskierungsverfahren nach Anspruch 2, wobei der erste Algorithmus in der Wahlfolge ein Algorithmus Medge ist, der in der Lage ist, die Kanteninformation zu bewahren, wenn der fehlerhafte Makroblock der Kantenklasse oder der Texturklasse angehört, und ein Algorithmus Msmooth, der auf die Wiederherstellung von glatten Variationen spezialisiert ist, wenn der fehlerhafte Makroblock der Rauschklasse oder der monotonen Klasse angehört.

4. Maskierungsverfahren nach Anspruch 3, wobei der Algorithmus Medge eine quadrilineare Interpolation ist.

5. Maskierungsverfahren nach Anspruch 3, wobei der Algorithmus Msmooth eine möglichst glatte Interpolation ist.

6. Vorrichtung zum Maskieren von Fehlern in einem Bildsignal, das in einer Makroblock-komprimierten Form übertragen wird, wobei jeder Makroblock Pixelzeilen und -spalten umfasst, diese Maskierungsvorrichtung mindestens umfasst:
a) Mittel zum Decodieren (102) des übertragenen Bildsignals;
b) Mittel zum Erkennen (103) eines fehlerhaften Makroblocks;
c) Mittel zum Klassifizieren (108) des fehlerhaften Makroblocks, um eine Klasse zu erhalten, welcher der fehlerhafte Makroblock angehört;
d) Mittel zum Korrigieren (109) des fehlerhaften Makroblocks seiner Klasse entsprechend; wobei diese Vorrichtung außerdem **dadurch gekennzeichnet ist, dass**:
i) dieser fehlerhafte Makroblock mindestens einen gültigen umgebenden Makroblock aufweist, der keinen Fehler enthält;
ii) diese Mittel zum Klassifizieren (108) mindestens umfassen:
- Mittel zum Berechnen eines Gradienten (104) für jeden gültigen umgebenden Makroblock, für jedes Pixel einer Zeile oder einer Spalte benachbart zum fehlerhaften Makroblock, durch Subtrahieren der Werte zweier aufeinanderfolgender Pixel dieser Zeile oder Spalte;
- Mittel zum Auswerten (107) einer Zahl C_{dir} von Richtungsänderungen des Gradienten;
iii) der fehlerhafte Makroblock als eine Kantenklasse klassifiziert wird, wenn der Absolutwert mindestens eines Gradienten über einem ersten vordefinierten Schwellenwert liegt, als eine Texturklasse, wenn C_{dir} völlig positiv ist und die Zahl der Absolutwerte von Gradienten, die über einem zweiten vordefinierten Schwellenwert liegen, grösser ist als α multipliziert mit C_{dir}, wobei α eine programmierbare Menge ist, und, andernfalls, als ein Rauschen oder eine monotone Klasse.

7. Maskierungsvorrichtung nach Anspruch 6, wobei die Korrekturmittel einen Algorithmus verwenden, der aus einem Satz Algorithmen mit einer vorgegebenen Wahlfolge gewählt wird, wobei dieser Satz und/oder diese Wahlfolge je nach Klasse des fehlerhaften Makroblocks unterschiedlich ist.

8. Maskierungsvorrichtung nach Anspruch 7, wobei der erste Algorithmus in der Wahlfolge ein Algorithmus Medge ist, der in der Lage ist, die Kanteninformation zu bewahren, wenn der fehlerhafte Makroblock der Kantenklasse oder der Texturklasse angehört, und ein Algorithmus Msmooth, der auf die Wiederherstellung von glatten Variationen spezialisiert ist, wenn der fehlerhafte Makroblock der Rauschklasse oder der monotonen Klasse angehört.

9. Maskierungsvorrichtung nach Anspruch 8, wobei der Algorithmus Medge eine quadrilineare Interpolation ist.

10. Maskierungsvorrichtung nach Anspruch 8, wobei der Algorithmus Msmooth eine möglichst glatte Interpolation ist.

11. Computerprogramm, umfassend einen Satz Anweisungen, die, wenn sie in einen Prozessor oder Computer geladen werden, den Prozessor oder Computer veranlassen, das Maskierungsverfahren nach Anspruch 1 auszuführen.

## Revendications

1. Procédé de masquage d'erreurs dans un signal d'image transmis sous forme de macrobloc comprimé, chaque macrobloc comprenant des lignes et des colonnes de pixels, le procédé comprenant au moins les étapes suivantes:
a) décoder (102) le signal d'image transmis;
b) détecter (103) un macrobloc erroné;
c) classer (108) le macrobloc erroné pour obtenir une catégorie à laquelle le macrobloc erroné appartient, et
d) corriger (109) le macrobloc erroné en fonction de sa catégorie, ledit procédé étant en outre **caractérisé en ce que** :
i) ledit macrobloc erroné présente au moins un macrobloc environnant valide ne contenant pas d'erreur;
ii) ladite étape de classification (108) comprend au moins les sous-étapes suivantes:
- le calcul d'un gradient (104), pour chaque macrobloc environnant valide, pour chaque pixel d'une ligne ou d'une colonne adjacente au macrobloc erroné, en soustrayant les valeurs de deux pixels consécutifs de ladite ligne ou colonne;
- l'évaluation (107) d'un nombre C_{dir} de changements de direction du gradient;
iii) le macrobloc erroné est classé dans une catégorie de bord si la valeur absolue d'au moins un gradient est supérieure à un premier seuil prédéfini, dans une catégorie de texture si C_{dir} est strictement positif et que le nombre de valeurs absolues de gradients supérieurs à un second seuil prédéfini est supérieur à α multiplié par C_{dir}, α étant une quantité programmable, et sinon dans une catégorie de bruit ou dans une catégorie monotone.

2. Procédé de masquage selon la revendication 1, dans lequel ladite étape de correction utilise un algorithme sélectionné à partir d'un jeu d'algorithmes présentant un ordre de sélection prédéterminé, ledit ordre de jeu et/ou de sélection variant en fonction de la catégorie du macrobloc erroné.

3. Procédé de masquage selon la revendication 2, dans lequel le premier algorithme dans l'ordre de sélection est un algorithme Medge en mesure de préserver des informations de bord si le macrobloc erroné appartient à la catégorie de bord ou à la catégorie de texture, et un algorithme Msmooth spécialisé dans la reconstruction de variations lisses si le macrobloc erroné appartient à la catégorie de bruit ou à la catégorie monotone.

4. Procédé de masquage selon la revendication 3, dans lequel ledit algorithme Medge est une interpolation quadrilinéaire.

5. Procédé de masquage selon la revendication 3, dans lequel ledit algorithme Msmooth est une interpolation présentant un lissage maximal.

6. Dispositif destiné à dissimuler des erreurs dans un signal d'image transmis sous forme de macrobloc comprimé, chaque macrobloc comprenant des lignes et des colonnes de pixels, ledit dispositif de masquage comprenant au moins :
a) des moyens pour décoder (102) le signal d'image transmis;
b) des moyens pour détecter (103) un macrobloc erroné;
c) des moyens pour classer (108) le macrobloc erroné et pour obtenir une catégorie à laquelle le macrobloc erroné appartient, et
d) des moyens pour corriger (109) le macrobloc erroné en fonction de sa catégorie, ledit dispositif étant en outre **caractérisé en ce que** :
i) ledit macrobloc erroné présente au moins un macrobloc environnant valide ne contenant pas d'erreur;
ii) lesdits moyens pour classer (108) comprennent au moins:
- des moyens pour calculer un gradient (104), pour chaque macrobloc environnant valide, pour chaque pixel d'une ligne ou d'une colonne adjacente au macrobloc erroné, en soustrayant les valeurs de deux pixels consécutifs de ladite ligne ou colonne;
- des moyens pour évaluer (107) un nombre C_{dir} de changements de direction du gradient;
iii) le macrobloc erroné est classé dans une catégorie de bord si la valeur absolue d'au moins un gradient est supérieure à un premier seuil prédéfini, dans une catégorie de texture si C_{dir} est strictement positif et que le nombre de valeurs absolues de gradients supérieurs à un second seuil prédéfini est supérieur à α multiplié par C_{dir}, α étant une quantité programmable, et sinon dans une catégorie de bruit ou dans une catégorie monotone.

7. Dispositif de masquage selon la revendication 6, dans lequel lesdits moyens de correction utilisent un algorithme sélectionné à partir d'un jeu d'algorithmes présentant un ordre de sélection prédéterminé, ledit ordre de jeu et/ou de sélection variant en fonction de la catégorie du macrobloc erroné.

8. Dispositif de masquage selon la revendication 7, dans lequel le premier algorithme dans l'ordre de sélection est un algorithme Medge en mesure de préserver des informations de bord si le macrobloc erroné appartient à la catégorie de bord ou à la catégorie de texture, et un algorithme Msmooth spécialisé dans la reconstruction de variations lisses si le macrobloc erroné appartient à la catégorie de bruit ou à la catégorie monotone.

9. Dispositif de masquage selon la revendication 8, dans lequel ledit algorithme Medge est une interpolation quadrilinéaire.

10. Dispositif de masquage selon la revendication 8, dans lequel ledit algorithme Msmooth est une interpolation présentant un lissage maximal.

11. Programme informatique comprenant un jeu d'instructions qui, lorsqu'il est chargé sur un processeur ou un ordinateur, amène le processeur ou l'ordinateur à exécuter le procédé de masquage suivant la revendication 1.
